Europäisches Patentamt

European Patent Office

Office européen des brevets

(11) Publication number: **0 476 373 A2**

# EUROPEAN PATENT APPLICATION

(21) Application number: **91114392.3**

(22) Date of filing: **27.08.91**

(51) Int. Cl.5: **B62D 7/15**

(30) Priority: **18.09.90 JP 246026/90**

(43) Date of publication of application:
**25.03.92 Bulletin 92/13**

(84) Designated Contracting States:
**DE GB**

(71) Applicant: **NISSAN MOTOR CO., LTD.**
**No.2, Takara-cho, Kanagawa-ku**
**Yokohama City(JP)**

(72) Inventor: **Yasuno, Yoshiki**
**Wakabahaitsu, No 1-7-23, Deiki, Kanazawa-ku**
**Yokohama City, Kanagawa Pref.(JP)**
Inventor: **Ito, Ken**
**No 514-1, Shinanomachi, Totsuka-ku**
**Yokohama City, Kanagawa Pref.(JP)**

(74) Representative: **TER MEER - MÜLLER -**
**STEINMEISTER & PARTNER**
**Mauerkircherstrasse 45**
**W-8000 München 80(DE)**

(54) Vehicle dynamic characteristic control apparatus.

(57) A vehicle dynamic characteristic control apparatus for use with an automotive vehicle supported on a pair of front wheels and a pair of rear wheels. The vehicle has a first degree of freedom providing a first motion of the vehicle and a second degree of freedom providing a second motion of the vehicle. The first and second motions are on a plane. The apparatus comprises a first unit for controlling braking forces to be applied to left and right wheels of at least one of the wheel pairs to provide a difference between the braking force applied to the left wheel and the braking force applied to the right wheel, a second unit for controlling a steering angle of one of the wheel pairs, and sensor means sensitive to operating conditions of the vehicle for providing sensor signals indicative of sensed vehicle operating conditions. The apparatus also comprises a third unit coupled to the sensor means for controlling the first and second units. The third unit includes first means for calculating a first target value for a first parameter related to the first motion of the vehicle based upon the sensed vehicle operating conditions and a second target value for a second parameter related to the second motion of the vehicle based upon the sensed vehicle operating conditions. The first means controls the first and second units to bring the first parameter to the first target value and the second parameter to the second target value.

FIG. 1

## BACKGROUND OF THE INVENTION

This invention relates to a vehicle dynamic characteristic control apparatus for use with an automotive vehicle.

For example, Japanese Patent Kokai No. 61-67665 discloses a vehicle steering control apparatus for controlling a vehicle dynamic characteristic based upon various vehicle operating conditions. The apparatus includes a control unit for calculating a target yaw rate from a vehicle model specifying the target yaw rate as a function of vehicle speed and vehicle steering condition. The control unit controls the rear-wheel steering angle to achieve the target yaw rate.

The conventional steering control apparatus is satisfactory for providing good characteristics for one vehicle dynamic parameter. However, it fails to provide good characteristics for two vehicle dynamic parameters. For example, the conventional steering control can provide good steady and transient characteristics for vehicle yaw rate; however, it cannot provide good steady and transient characteristics for vehicle lateral speed.

## SUMMARY OF THE INVENTION

Therefore, a main object of the invention is to provide an improved vehicle dynamic characteristic control apparatus which can provide good characteristics for two vehicle dynamic parameters.

It is another object of the invention to provide an improved vehicle dynamic characteristic control apparatus which can provide good steady and transient characteristics for the vehicle lateral speed as well as the yaw rate.

It is still another object of the invention to provide an improved vehicle dynamic characteristic control apparatus which can provide the same steady and transient characteristics for the vehicle lateral speed regardless of vehicle braking.

There is provided, in accordance with the invention, a vehicle dynamic characteristic control apparatus for use with an automotive vehicle supported on a pair of front wheels and a pair of rear wheels. The vehicle has a first degree of freedom providing a first motion of the vehicle and a second degree of freedom providing a second motion of the vehicle. The first and second motions are on a plane. The apparatus comprises a first unit for controlling braking forces to be applied to left and right wheels of at least one of the wheel pairs to provide a difference between the braking force applied to the left wheel and the braking force applied to the right wheel, a second unit for controlling a steering angle of one of the wheel pairs, and sensor means sensitive to operating conditions of the vehicle for providing sensor signals indicative of sensed vehicle operating conditions. The apparatus also comprises a third unit coupled to the sensor means for controlling the first and second units. The third unit includes first means for calculating a first target value for a first parameter related to the first motion of the vehicle based upon the sensed vehicle operating conditions and a second target value for a second parameter related to the second motion of the vehicle based upon the sensed vehicle operating conditions. The first means controls the first and second units to bring the first parameter to the first target value and the second parameter to the second target value.

## BRIEF DESCRIPTION OF THE DRAWINGS

The invention will be described in greater detail by reference to the following description taken in connection with the accompanying drawings, in which:

Fig. 1 is a schematic diagram showing a braking force control unit used in one embodiment of a vehicle dynamic characteristic control apparatus embodying the invention;

Fig. 2 is a schematic diagram showing the first actuator used in the braking force control unit of Fig. 1;

Fig. 3 is a schematic diagram showing the second actuator used in the braking force control unit of Fig. 1;

Fig. 4 is a schematic diagram showing a rear-wheel steering control unit used in the vehicle dynamic characteristic control apparatus of the invention;

Fig. 5 is a diagram showing a model of an automotive vehicle having two degrees of freedom;

Fig. 6 is a flow diagram showing the programming of the digital computer as it is used to calculate target values for the fluid pressures supplied to the left and right front wheel cylinders; and

Fig. 7 is a flow diagram showing the programming of the digital computer as it is used to control the fluid pressure introduced to one of the front wheel cylinders; and

Fig. 8 is a time chart used in explaining the operation of the vehicle dynamic characteristic control

3

apparatus of the invention.

## DETAILED DESCRIPTION OF THE INVENTION

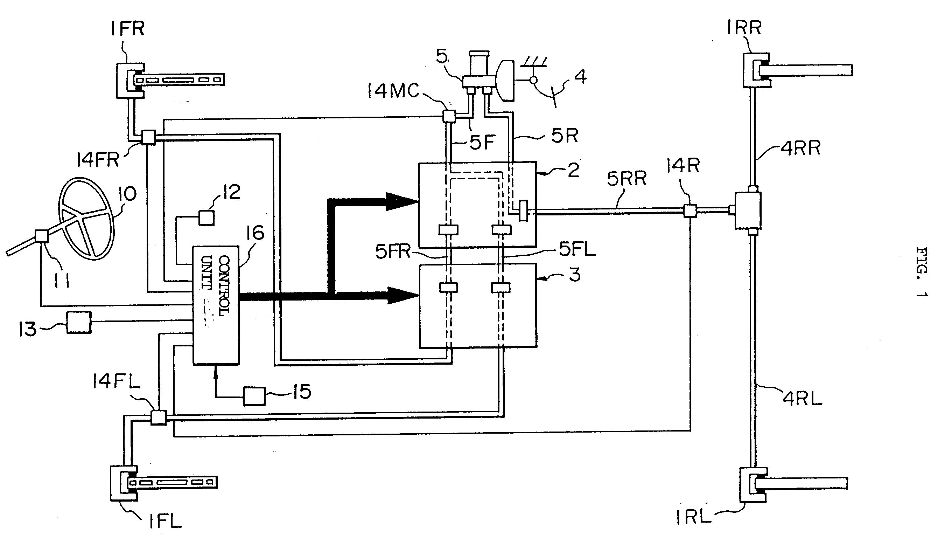

With reference to the drawings, and in particular to Fig. 1, there is shown a schematic diagram of a braking force control unit used in a vehicle dynamic characteristic control apparatus embodying the invention. The invention will be described in connection with an automotive vehicle supported on a pair of front road wheels associated with respective front wheel cylinders 1FL and 1FR situated in front wheel brakes for application of brakes to the respective front road wheels and a pair of rear road wheels associated with respective rear wheel cylinders 1RL and 1RR situated in rear wheel brakes for application of brakes to the respective rear road wheels. First and second actuators 2 and 3 operate the wheel cylinders 1FL, 1FR, 1RL and 1RR for applying controlled braking forces to the respective road wheels. The numeral 4 designates a brake pedal which actuates the pistons in a tandem master cylinder 5 and forces fluid through first and second conduits 5F and 5R to the first actuator 2.

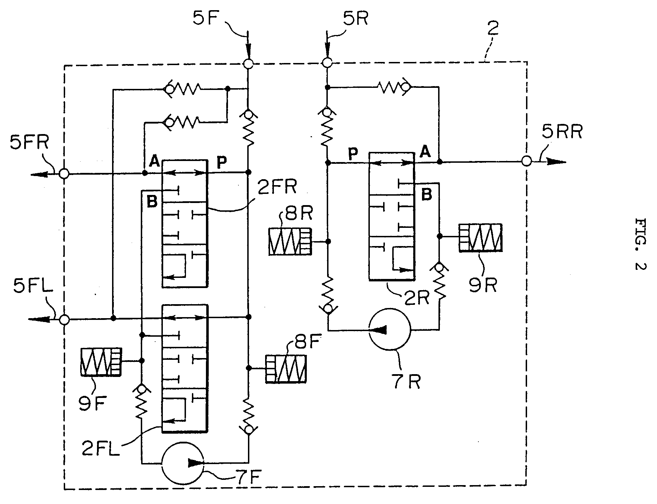

Referring to Fig. 2, the first actuator 2 includes solenoid valves 2FL, 2FR and 2R. The solenoid valve 2FL has three ports A, B and P. The port P is connected to the first conduit 5F, the port A is connected to a conduit 5FL, and the port B is connected to the first conduit 5F through a motor driven pump 7F. A reservoir 9F is connected to the conduit connected between the port B and the pump 7F. An accumulator 8F is connected to the conduit connected between the pump 7F and the port P for charging up the fluid flow through the conduit. The solenoid valve 2FL operates on a command current signal fed thereto from a control unit 16 to occupy one of three positions. The first position, illustrated in Fig. 1, is occupied to provide communication between the ports P and A so as to increase the fluid pressure introduced into the wheel cylinder 1FL. The second position is encountered to interrupt the communication between the ports P and A so as to retain the fluid pressure in the conduit 5FL at a constant value. The third position is encountered to provide communication between the ports A and B so as to reduce the fluid pressure in the conduit 5FL.

Similarly, the solenoid valve 2FR has three ports A, B and P. The port P is connected to the first conduit 5F and also to the port P of the solenoid valve 2FL, the port A is connected to a conduit 5FR, and the port B is connected to the port B of the solenoid valve 2FL. The solenoid valve 2FR operates on a command current signal fed thereto from the control unit 16 to occupy one of three positions. The first position, illustrated in Fig. 1, is occupied to provide communication between the ports P and A so as to increase the fluid pressure introduced into the conduit 5FR. The second position is encountered to interrupt the communication between the ports P and A so as to retain the fluid pressure in the conduit 5FR at a constant value. The third position is encountered to provide communication between the ports A and B so as to reduce the fluid pressure in the conduit 5FR.

The solenoid valve 2R has three ports A, B and P. The port P is connected to the second conduit 5R, the port A is connected through a conduit 5RR to the wheel cylinders 1RL and 1RR, and the port B is connected to the second conduit 5r through a motor driven pump 7R. A reservoir 9R is connected to the conduit connected between the port B and the pump 7R. An accumulator 8R is connected to the conduit connected between the pump 7R and the port P for charging up the fluid flow through the conduit. The solenoid valve 2R operates on a command current signal fed thereto from the control unit 16 to occupy one of three positions. The first position, illustrated in Fig. 1, is occupied to provide communication between the ports P and A so as to increase the fluid pressure introduced to the wheel cylinders 1RL and 1RR. The second position is encountered to interrupt the communication between the ports P and A so as to retain the fluid pressure in the wheel cylinders 1RL and 1RR at a constant value. The third position is encountered to provide communication between the ports A and B so as to reduce the fluid pressure in the wheel cylinders 1RL and 1RR.

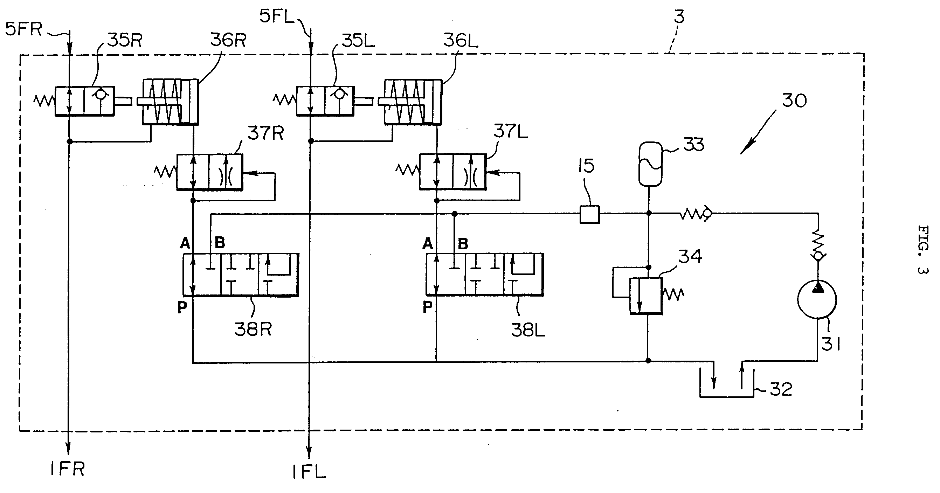

Referring to Fig. 3, the second actuator 3 includes a pressure source 30 comprised of a pump 31 operable on a command fed thereto from the control unit 16 to supply fluid from a reservoir 32 to cause an accumulator 33 to charge up the fluid flow through a conduit connected to the pump 31. A pressure sensor 15 is provided to sense the pressure P charged in the accumulator 33. When the accumulator pressure P exceeds a predetermined value P1, the control unit 16 produces a command stopping the pump 31 so as to maintain the accumulator pressure P at a constant value. When the accumulator pressure P exceeds a predetermined value P2 greater than the predetermined value P1 in the event of failure of the pressure sensor 15, a relief valve 34 operates to connect the accumulator 33 to the reservoir 32.

The second actuator 3 also includes a valve 35R movable between two position. The valve 35R permits free fluid from between the conduit 5FR and the wheel cylinder 1FR in the first position, illustrated in Fig. 3, and it serves as a check valve to prevent fluid flow from the wheel cylinder 1FR to the conduit 5FR. The

4

EP 0 476 373 A2

position of the valve 35R is selected by a cylinder unit 36R comprised of a cylinder and a piston placed for sliding movement within a cylinder. This piston divides the cylinder into two chambers, the first chamber being connected to the wheel cylinder 1FR. The second chamber is connected to through a pressure responsive valve 37R to a solenoid valve 38R. The solenoid valve 38R has three ports A, B and C. The port P is connected to the reservoir 32. The port B is connected to the accumulator 33. The port A is connected through the valve 37R to the second chamber of the cylinder unit 36R. The solenoid valve 38R operates on a command current signal fed thereto from the control unit 16 to occupy one of three positions. The first position, illustrated in Fig. 3, is occupied normally to provide communication between the ports A and P so as to connect the pressure responsive valve 37R to the reservoir 32. In the first position, the pressure responsive valve 37R is in a position connecting the second chamber of the cylinder unit 36R to the reservoir 32 so as to hold the valve 35R in the first position, illustrated in Fig. 3, connecting the conduit 5FR to the wheel cylinder 1FR. The second position is encountered to interrupt the communication between the ports P and A so as to retain the fluid pressure in the second chamber of the cylinder unit 36R. The third position is encountered to provide communication between the ports A and B so as to introduce a fluid pressure from the accumulator 33 into the second chamber of the cylinder unit 36R. In the third position, the throttle valve 37R is in a second position throttling the fluid flow from the accumulator 33 to the second chamber of the cylinder unit 36R. As a result, the piston moves to the left, as viewed in Fig. 3, to move the valve 35R to the second position preventing fluid flow from the wheel cylinder 1FR to the conduit 5FR and also to pressurize the fluid in the wheel cylinder 1FR.

Similarly, the second actuator 3 includes a valve 35L movable between two position. The valve 35L permits free fluid from between the conduit 5FL and the wheel cylinder 1FL in the first position, illustrated in Fig. 3, and it serves as a check valve to prevent fluid flow from the wheel cylinder 1FL to the conduit 5FL. The position of the valve 35L is selected by a cylinder unit 36L comprised of a cylinder and a piston placed for sliding movement within a cylinder. This piston divides the cylinder into two chambers, the first chamber being connected to the wheel cylinder 1FL. The second chamber is connected to through a pressure responsive valve 37L to a solenoid valve 38L. The solenoid valve 38L has three ports A, B and C. The port P is connected to the reservoir 32. The port B is connected to the accumulator 33. The port A is connected through the valve 37L to the second chamber of the cylinder unit 36L. The solenoid valve 38L operates on a command current signal fed thereto from the control unit 16 to occupy one of three positions. The first position, illustrated in Fig. 3, is occupied normally to provide communication between the ports A and P so as to connect the pressure responsive valve 37L to the reservoir 32. In the first position, the pressure responsive valve 37L is in a position connecting the second chamber of the cylinder unit 36L to the reservoir 32 so as to hold the valve 35L in the first position, illustrated in Fig. 3, connecting the conduit 5FL to the wheel cylinder 1FL. The second position is encountered to interrupt the communication between the ports P and A so as to retain the fluid pressure in the second chamber of the cylinder unit 36L. The third position is encountered to provide communication between the ports A and B so as to introduce a fluid pressure from the accumulator 33 into the second chamber of the cylinder unit 36L. In the third position, the throttle valve 37L is in a second position throttling the fluid flow from the accumulator 33 to the second chamber of the cylinder unit 36L. As a result, the piston moves to the left, as viewed in Fig. 3, to move the valve 35L to the second position preventing fluid flow from the wheel cylinder 1FL to the conduit 5FL and also to pressurize the fluid in the wheel cylinder 1FL.

The second actuator 3 can separately control the braking pressures introduced into the respective wheel cylinders 1FL and 1FR so as to provide a desired difference between the braking force applied to the left wheel and the braking force applied to the right wheel in the absence of vehicle braking.

Returning to Fig. 1, each of the command current signals to the respective solenoid valves 2FL, 2FR, 2R, 38L and 38R has three levels repetitively determined from calculations performed by the control unit 16. These calculations are made based upon various conditions of the automotive vehicle that are sensed during its operation. These sensed conditions include steering angle $\theta$, vehicle speed Vx, brake pedal position, master cylinder pressure $P_{MC}$, fluid pressures $P_{FL}$ and $P_{FR}$ supplied to the respective wheel cylinders 1FL and 1FR, and fluid pressure PR supplied to the wheel cylinders 1RL and 1RR. Thus, a steering angle sensor 11, a vehicle speed sensor 12, a brake switch 13, fluid pressure sensors 14MC, 14FL, 14FR and 14R, and the pressure sensor 15 are connected to the control unit 16.

The steering angle sensor 11 is provided to sense the degree $\theta$ of rotation of a steering wheel 10 with respect to its neutral position and it produces an electric signal indicative of the sensed steering angle $\theta$. The steering angle indication signal has a sign indicating the direction in which the steering wheel turns. In the illustrated case, the steering angle indication signal has a positive sign when the steering wheel 10 turns to the left with respect to its neutral position and a negative sign with the steering wheel 10 turns to the right with respect to its neutral position. The vehicle speed sensor 12 is provided to sense the vehicle

5

longitudinal speed Vx and it produces an electric signal indicative of the sensed vehicle speed Vx. The brake switch 13 is associated with the brake pedal 4 to close to supply current from the engine battery to the control unit 16 in response to the application of foot braking to the vehicle (when the brake pedal 4 is depressed). The master cylinder pressure sensor 14MC is shown as positioned in the first conduit 5F to sense the fluid pressure $P_{MC}$ and it produces an electric signal indicative of the sensed pressure $P_{MC}$ of the fluid discharged from the master cylinder 5. The fluid pressure sensors 14FL and 14FR are positioned to sense the fluid pressures $P_{FL}$ and $P_{FR}$ introduced into the respective wheel cylinders 1FL and 1FR. The fluid pressure sensors 14FL and 14FR produce electric signals indicative of the sensed fluid pressures $P_{FL}$ and $P_{FR}$ to the control unit 16. The fluid pressure sensor 14R is positioned to sense the fluid pressure PF introduced into the wheel cylinders 1RL and 1RR. The fluid pressure sensors 14R produces an electric signal indicative of the sensed fluid pressure $P_R$ to the control unit 16.

The control unit 16 may employ a digital computer including an input interface, an output interface, a central processing unit, and a memory. The control processing unit communicates with the rest of the computer va data bus. The memory contains programs for operating the central processing unit and further contains appropriate data (vehicle model) used in calculating appropriate command signal values. The vehicle model may be derived from equations of motions of a vehicle similar to the vehicle to be controlled. The calculated command signal valves are transferred by the central processing unit to the output interface which converts them into analog form for application to respective floating type constant current circuits. The constant current circuits set the solenoid valves 2FL, 2FR, 2R, 38L and 28R and the pumps 7F, 7R and 31 according to the calculated values for them to perform anti-skid control and braking force differential control.

When the solenoid valves 2FL and 2FR are turned off (in the first position) in the presence of vehicle braking, fluid pressure is introduced from the master cylinder 5 into the front wheel cylinders 1FL and 1FR through the second actuator 3 held in the position illustrated in Fig. 3. In this case, both of the fluid pressure $P_{FL}$ and $P_{FR}$ are equal to the master cylinder fluid pressure $P_{MC}$. If the pump 7F is turned on with one of the solenoid valves 2FL and 2FR being turned on, the one solenoid valve 2FL or 2FR will move to its second or third position to reduce the fluid pressure in the corresponding wheel cylinder so as to produce a difference between the fluid pressures in the front wheel cylinders 1FL and 1FR. This difference provides a difference between the braking force applied to the front-left wheel and the braking force applied to the front-right wheel.

When one of the solenoid valves 38L and 38R is moved to its third position in the absence of vehicle braking, the fluid charged in the corresponding one front cylinder wheel is pressurized to produce a difference between the fluid pressures in the front wheel cylinders 1FL and 1FR. This difference provides a difference between the braking force applied to the front-left wheel and the braking force applied to the front-right wheel. This braking force difference can be retained when the solenoid valves 38L and 38R are moved to the second position.

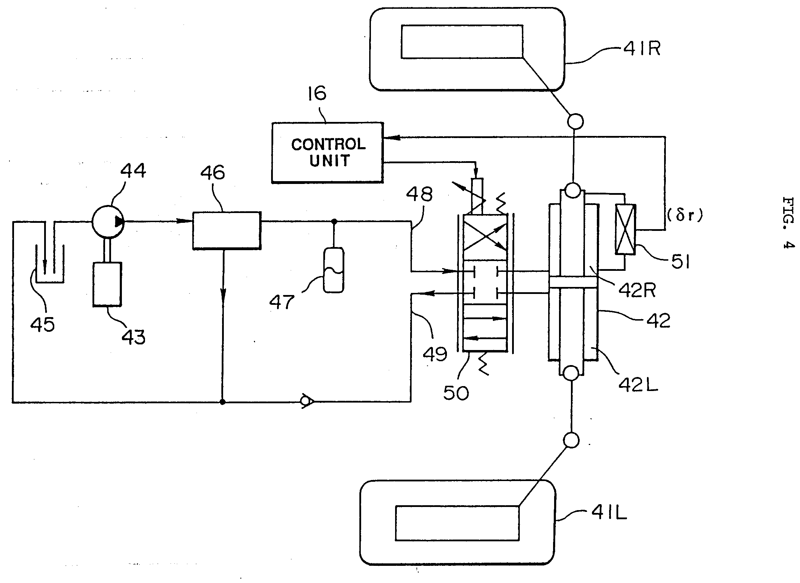

Referring to Fig. 4, there is shown a rear-wheel steering control unit used in the vehicle dynamic characteristic control apparatus of the invention. The rear wheels 41L and 41R are associated with an auxiliary steering actuator 42 of the spring center type having two pressure chambers 42L and 42R for turning the rear wheels 41L and 41R in response to the fluid pressure acting in the first or second pressure chamber 42L or 42R. The auxiliary steering actuator 42 turns the rear wheels 41L and 41R in a counter-clockwise direction at an angle proportional to the fluid pressure introduced into the first pressure chamber 42L with respect to the vehicle longitudinal axis and it turns the rear wheels 41L and 41R in the clockwise direction at an angle proportional to the fluid pressure introduced into the second pressure chamber 42R with respect to the vehicle longitudinal axis. A pump 44, which is driven by the engine 43, supplies fluid from a reservoir 45 through an unloading valve 46 to cause an accumulator 47 to be charged up the fluid flow through a conduit 48.

The rear-wheel steering control unit includes a control valve 50 operable on a command current signal fed thereto from the control unit 16 to occupy one of three positions. The first position is occupied when the command current signal is a first level and the control valve 50 provides communication of the first chamber 42L of the auxiliary steering actuator 42 with the conduit 48 and communication of the second chamber 42R of the auxiliary steering actuator 42 with a drain conduit 49 which is connected through a check valve to the reservoir 45. As a result, the rear wheels 41L and 41R turn in the counter-clockwise direction. The second position, illustrated in Fig. 4, is occupied when the command current signal is a level of zero and the control valve 50 interrupts the communication of the auxiliary steering actuator 42 with the conduits 48 and 49 to retain the existing rear-wheel steering angle. The third position is encountered when the command current signal is a second level and the control valve 50 provides communication of the first pressure chamber 42L with the drain conduit 49 and communication of the second pressure chamber 42R with the conduit 48. As a result, the rear wheels 41L and 41R turn in the clockwise direction. A rear-wheel steering angle sensor 51 is provided to sense the steering angle of the rear wheels 41L and 41R. The rear-wheel steering angle sensor 51 provides a feedback signal to the control unit 16 to ensure that the rear-wheel steering angle is correct to maintain a target value calculated by the control unit 16.

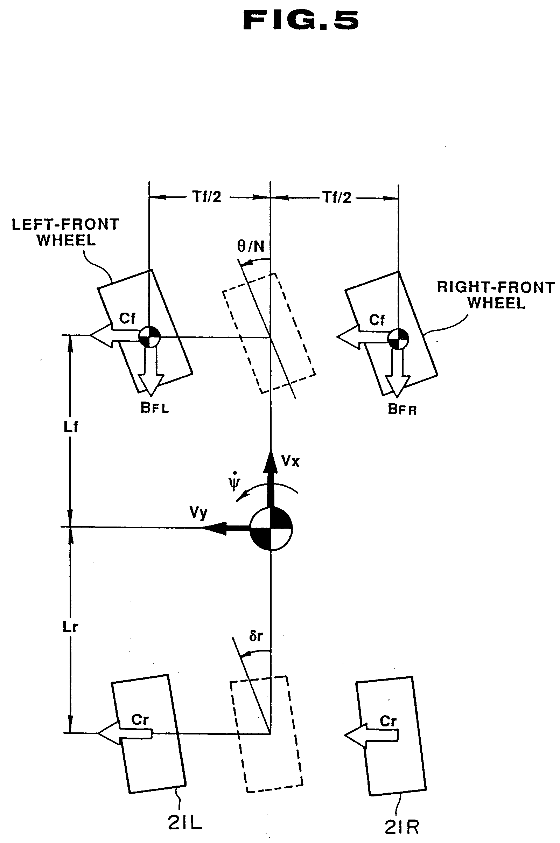

The principles of the invention will be described with reference to Fig. 5. Assuming now that the vehicle has two degrees of freedom, the first degree of freedom providing the yaw motion corresponding to a rotation of the vehicle about its gravity center. The second degree of freedom provides the lateral motion of the vehicle. The following equations of motions are obtained for a instant (t):

$$Iz \cdot \ddot{\phi}(t) = Cf \cdot Lf - Cr \cdot Lr + Tf \cdot \frac{B_{FL}(t) - B_{FR}(t)}{2} \qquad (1)$$

$$M \cdot \dot{V}y(t) = 2(Cf + Cr) - M \cdot Vx(t) \cdot \dot{\phi}(t) \qquad (2)$$

where Iz is the yaw inertia moment of the vehicle, $\dot{\psi}$ is the yaw rate, Lf is the distance between the gravity center of the vehicle and the front axle, Lr is the distance between the vehicle gravity center and the rear axle, Tf is the distance between the front wheels, $B_{FR}(t)$ is the braking force applied to the left front wheel, $B_{FR}(t)$ is the braking force applied to the right front wheel, M is the weight of the vehicle, Vy is the speed of lateral motion of the vehicle, $\dot{V}y(t)$ is the acceleration of lateral motion of the vehicle, Vx is the speed of longitudinal motion of the vehicle, and Cf and Cr are the cornering forces of the front and rear wheels. The cornering forces Cf and Cr are given as

$$Cf = Kf \cdot \left( \frac{\theta(t)}{N} - \frac{Vy + Lf \cdot \dot{\phi}(t)}{Vx(t)} \right) \qquad (3)$$

$$Cr = Kr \cdot \left( \delta r(t) - \frac{Lr \cdot \dot{\phi}(t)}{Vx(t)} \right) \qquad (4)$$

where $\theta(t)$ is the steering angle, N is the steering gear ratio, Kf is the front-wheel cornering power, Kr is the rear-wheel cornering power, and $\delta r(t)$ is the rear-wheel steering angle.

Substituting Equations (3) and (4) into Equations (1) and (2) gives

$$\ddot{\phi}(t) = a11 \cdot \dot{\phi}(t) + a12 \cdot Vy(t) + bf1 \cdot \theta(t)$$

$$+ br1 \cdot \delta r(t) + bp1 \cdot \Delta Bf(t) \qquad (5)$$

$$\dot{V}y(t) = a21 \cdot \dot{\phi}(t) + a22 \cdot Vy(t) + bf2 \cdot \theta(t) + br2 \cdot \delta r(t) \qquad (6)$$

where

$$\Delta Bf(t) = B_{FL}(t) - B_{FR}(t) \qquad (7)$$

$$a11 = -2(Kf \cdot Lf + Kr \cdot Lr)/(Iz \cdot Vx) \qquad (8)$$

$$a12 = -2(Kf \cdot Lf - Kr \cdot Lr)/(Iz \cdot Vx) \qquad (9)$$

$$a21 = -2(Kf \cdot Lf - Kr \cdot Lr)/(M \cdot Vx) - Vx \qquad (10)$$

$$a22 = -2(Kf + Kr)/(M \cdot Vx) \qquad (11)$$

$bf1 = 2 \cdot Kf \cdot Lf/(Iz \cdot N)$　(12)

$bf2 = 2 \cdot Kf/(M \cdot N)$　(13)

$br1 = -2 \cdot Kr \cdot Lr/Iz$　(14)

$br2 = 2 \cdot Kr/M$　(15)

$bp1 = Tf/(2 \cdot Iz)$　(16)

Using a differential operator S, Equations (5) and (6) may be modified to give the produced yaw rate $\dot{\psi}1$ in relation to the steering angle $\theta(t)$.

$$\dot{\phi}1(t) = \frac{bf1 \cdot S + (a12 \cdot bf2 - a22 \cdot bf1)}{S^2 - (a11 + a22)S + (a11 \cdot a22 - a12 \cdot a21)} \theta(t)$$

$$= X(S)\,\theta(t) \qquad (17)$$

Similarly, the relationship of the produced lateral speed Vy1(t) with respect to the steering angle $\theta(t)$ is given as

$$Vy1(t) = \frac{bf2 \cdot S + (a21 \cdot bf1 - a11 \cdot bf2)}{S^2 - (a11 + a22)S + (a11 \cdot a22 - a12 \cdot a21)} \theta(t)$$

$$= Y(S)\,\theta(t) \qquad (18)$$

where X(S) and Y(S) are the transfer functions taken in the form of (an equation of the first degree)/(an equation of the second degree). It is apparent from Equations (17) and (18) that the tendency of the produced yaw rate $\dot{\psi}1(t)$ and the lateral speed Vy1(t) to oscillate with respect to the steering angle $\theta(t)$ increases so as to degrade the vehicle steering performance as the vehicle speed Vx increases. It has been proposed to control the rear-wheel steering angle in such a manner that the produced yaw rate agrees well with a target yaw rate $\dot{\psi}r(t)$. Assuming now that the target yaw rate $\dot{\psi}r(t)$ has a first order lag without any over- and under-shoot with respect to the steering angle $\theta(t)$ and its steady value is equal to that for normal vehicles in the absence of vehicle braking, the target yaw rate $\dot{\psi}r(t)$ is given by

$\dot{\phi}r(t) = Ho \cdot \theta(t)/(1 + \tau1 \cdot S)$　(19)

where Ho is the steady yaw rate gain obtained in the absence of vehicle braking. The steady yaw rate gain is given by

$Ho = Vx/(1 + A \cdot Vx^2) \cdot L \cdot N)$　(20)

where L is a wheel base, and A is a stability factor given by

$$A = \frac{-M(Lf \cdot Kf - Lr \cdot Kr)}{2 \cdot L^2 \cdot Kf \cdot Kr} \qquad (21)$$

Assuming now that the target value Vyr(t) for the vehicle lateral speed (second vehicle dynamic parameter) has a second order lag with respect to the steering angle $\theta(t)$ and its steady value is desired to be K times greater than that for normal vehicles, the target lateral speed Vyr(t) is given by

8

$$Vry(t) = K \cdot Go \cdot \theta(t)/(1 + \tau 2 \cdot S)^2 \qquad (22)$$

where Go is the steady lateral speed gain for normal vehicles and it is given by

$$Go = Lr \cdot Ho \{1 - M \cdot Lf \cdot Vx^2/(2 \cdot L \cdot Kr \cdot Lr)\} \qquad (23)$$

Description will be made to the manner in which the braking force difference $\Delta Bf(t)$ and the rear-wheel steering angle $\delta r(t)$ are controlled to bring the vehicle yaw rate $\dot{\psi}(t)$ to the target yaw rate $\dot{\psi}r(t)$ as expressed in Equation (19) and the vehicle lateral speed Vy(t) to the target value Vyr(t) as expressed in Equation (22). Equation (19) may be modified to obtain Equation (24) which gives the differentiated values $\dot{\psi}r(t)$ of the target vehicle yaw rate.

$$\dot{\phi}r(t) = Ho \cdot \theta(t)/\tau 1 - \phi r(t)/\tau 1 \qquad (24)$$

Similarly, Equation (22) may be modified to obtain Equations (25) and (26) which give the differentiated value Vyr(t) of the target vehicle lateral speed.

$$\dot{Vyr1}(t) = K \cdot Go \cdot \theta(t)/\tau 2 - Vyr1(t)/\tau 2 \qquad (25)$$

$$\dot{Vyr}(t) = Vyr1(t)/\tau 2 - Vyr(t)/\tau 2 \qquad (26)$$

If the vehicle yaw rate $\dot{\psi}(t)$ and lateral speed, which result from the steering angle $\theta(t)$, the braking force difference $\Delta Bf(t)$ and the rear-wheel steering angle $\delta r(t)$, are equal to the respective target values $\dot{\psi}r(t)$ and Vyr(t), the differentiated value $\ddot{\psi}(t)$ of the produced yaw rate will be equal to the differentiated value $\ddot{\psi}r(t)$ of the target yaw rate and the differentiated value $\dot{Vy}(t)$ of the produced lateral speed will be equal to the differentiated value $\dot{Vyr}(t)$ of the target lateral speed. It is assumed that $\dot{\psi}r(t) = \dot{\psi}(t)$, $\ddot{\psi}r(t) = \ddot{\psi}(t)$, $\dot{Vyr}(t) = \dot{Vy}(t)$. Substituting these values into Equations (5) and (6) gives

$$\ddot{\phi}r(t) = a11 \cdot \dot{\phi}r(t) + a12 \cdot Vyr(t) + bf1 \cdot \theta(t) + br1 \cdot \delta r(t)$$

$$+ \Delta Bf(t) \qquad (27)$$

$$\dot{Vyr}(t) = a21 \cdot \dot{\phi}r(t) + a22 \cdot Vyr(t) + bf2 \cdot \theta(t) + br2 \cdot \delta r(t) \qquad (28)$$

From Equations (27) and (28), the target braking force difference $\Delta Bf(t)$ and the target rear-wheel steering angle $\delta r(t)$ are given as

$$\Delta Br(t) = \frac{\ddot{\phi}r(t) - a11 \cdot \phi r(t) - a12 \cdot Vyr(t) - bf1 \cdot \theta(t)}{bp1}$$

$$- br1 \frac{\dot{Vyr}(t) - a21 \cdot \phi r(t) - a22 \cdot vyr(t) - bf2 \cdot \theta(t)}{bp1} - br2 \qquad (29)$$

$$\delta r(t) = \frac{\dot{Vyr}(t) - a21 \cdot verphir(t) - a22 \cdot Vyr(t) - bf2 \cdot \theta(t)}{bp2} \qquad (30)$$

It is, therefore, possible to bring the vehicle yaw rate to its target value and the vehicle lateral speed to its target value by controlling the braking force control unit of Figs 1 to 3 to provide the braking force difference $\Delta Bf(t)$ calculated from Equation (29) and the rear-wheel steering control unit of Fig. 4 to provide the rear wheel steering angle δr(t) calculated from Equation (30).

To provide the braking force difference ΔBf(t) calculated from Equation (29), the braking force control unit may be used to produce a corresponding pressure difference between the left- and right-front wheel cylinders 1FL and 1FR. If the moment of inertia of the road wheels is neglected, the relationship between the wheel cylinder pressure P and the braking force Bf is given by

$$Bf = \frac{2 \cdot \mu p \cdot Ap \cdot rp \cdot P}{R} = kp \cdot P \qquad (31)$$

where $kp = 2 \cdot \mu p \cdot Ap \cdot rp/R$, $\mu p$ is the coefficient of friction between the brake pad and the disc rotor, Ap is the area of the wheel cylinder, rp is the effective radius of the disc rotor and R is the radius of the tyre. Thus, a target pressure difference ΔP(t) between the fluid pressure in the left-front wheel cylinder 1FL and the fluid pressure in the right-front wheel cylinder 1FR is given as

$\Delta P(t) = \Delta Bf(t)/kp$ (32)

The target wheel cylinder pressures $P_{FL}(t)$ and $P_{FR}(t)$ are calculated based upon the target pressure difference ΔP(t) calculated from Equation (32) and the master cylinder pressure $P_{MC}(t)$. In order to provide the braking force difference ΔP(t) at the same rate of reduction of the vehicle speed as that obtained in the presence of vehicle braking, the target wheel cylinder pressures $P_{FL}(t)$ and $P_{FR}(t)$ should satisfy the following conditions:

$P_{FL}(t) + P_{FR}(t) = 2 \cdot P_{MC}(t)$ (33)

$P_{FL}(t) - P_{FR}(t) = \Delta P(t)$ (34)

Thus, the target wheel cylinder pressures PAL(t) and $P_{FR}(t)$ are given by

$P_{FL}(t) = P_{MC}(t) + \Delta P(t)/2$ (35)

$P_{FR}(t) = P_{MC}(t) - \Delta P(t)/2$ (36)

However, either of the target wheel cylinder pressures $P_{FL}(t)$ and $P_{FL}(t)$ is negative where $P_{MC}(t) < |\Delta P(t)/2|$. Taking preference of correct control of the braking force difference (Equation 34) in this case, the target wheel cylinder pressures $P_{FL}(t)$ and $P_{FR}(t)$ are obtained from the following equations:

$$
\begin{aligned}
P_{FL}(t) &= \Delta P(t) &&\text{where } \Delta P(t) \geq 0 \\
&= 0 &&\text{where } \Delta P(t) < 0
\end{aligned}
\qquad (37)
$$

$$
\begin{aligned}
P_{FR}(t) &= -\Delta P(t) &&\text{where } \Delta P(t) < 0 \\
&= 0 &&\text{where } \Delta P(t) \geq 0
\end{aligned}
\qquad (38)
$$

From Equations (35) to (38), the target wheel cylinder pressures $P_{FL}(t)$ and $P_{FR}(t)$ are given as

$P_{FL}(t) = max \{P_{MC}(t) + \Delta P(t)/2, \Delta P(t), 0\}$ (39)

$P_{FR}(t) = max \{P_{MC}(t) - \Delta P(t)/2, -\Delta P(t), 0\}$ (40)

where max {X, Y, X} means to select the maximum one of X, Y and Z.

Taking preference of correct control of the rate of reduction of the vehicle speed to the same value as that obtained in the presence of vehicle braking (Equation 33), the target wheel cylinder pressures $P_{FL}(t)$ and $P_{FL}(t)$ where $P_{MC}(t) < |\Delta P(t)/2|$ are obtained from the following equations:

$$P_{FL}(t) = 2 \cdot P_{MC}(t) \quad where \; \Delta P(t) \geq 0$$
$$= 0 \qquad\qquad where \; \Delta P(t) < 0 \qquad\qquad (41)$$

$$P_{FR}(t) = 2 \cdot P_{MC}(t) \quad where \; \Delta P(t) < 0$$
$$= 0 \qquad\qquad where \; \Delta P(t) \geq 0 \qquad\qquad (42)$$

From Equations (35), (36), (41) and (42), the target wheel cylinder pressures $P_{FL}(t)$ and $P_{FR}(t)$ are given as

$$P_{FL}(t) = max \; \{P_{MC}(t) + \Delta P(t)/2, \Delta P(t), 0\} \qquad (43)$$

$$P_{FR}(t) = max \; \{P_{MC}(t) - \Delta P(t)/2, -\Delta P(t), 0\} \qquad (44)$$

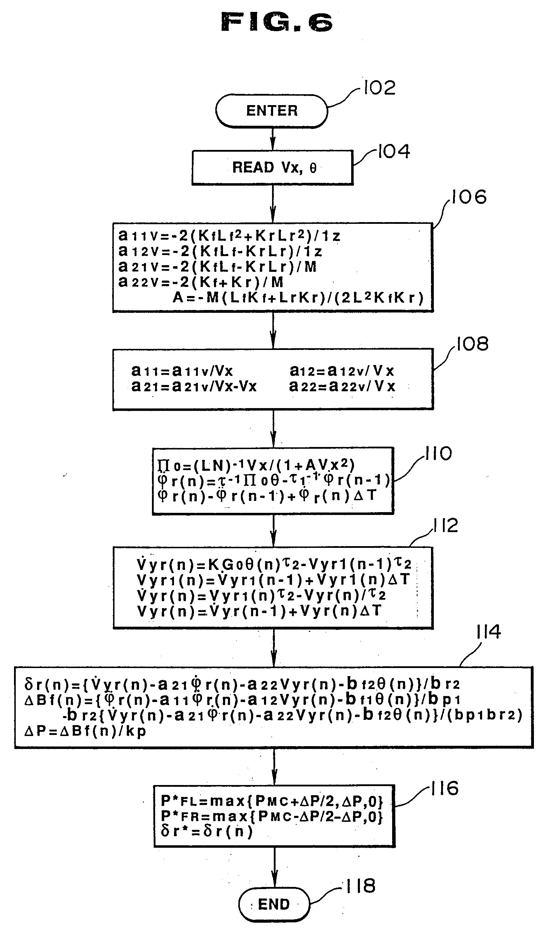

Fig. 6 is a flow diagram illustrating the programming of the digital computer as it is used to calculate target values $P^*_{FL}$ and $P^*_{FR}$ for the fluid pressures to be supplied to the wheel cylinders 1FL and 1FR and a target value $\delta r^*$ for the rear-wheel steering angle. The computer program is entered at the point 102 at uniform intervals of time $\Delta T$. At the point 104 in the program, the vehicle speed Vx and the steering angle $\theta$ are read into the computer memory. At the point 106 in the program, the coefficients a11V, a12V, a21V and a22V from the following equations:

$$a11V = -2 \cdot (Kf \cdot Lf^2 + Kr \cdot Lr^2)/Iz$$
$$a12V = -2 \cdot (Kf \cdot Lf - Kr \cdot Lr)/Iz$$
$$a21V = -2 \cdot (Kf \cdot Lf - Kr \cdot Lr)/M$$
$$a22V = -2 \cdot (Kf + Kr)/M$$

The stability factor A is calculated from Equation (21). At the point 108 in the program, the coefficients a11, a12, a21 and a22 are calculated as a11 = a11V/Vx, a12 = a12V/Vx, a21 = a21V/Vx - Vx, a22 = a22V/Vx.

At the point 110 in the program, the steady yaw rate gain Ho is calculated, from Equation (20), based upon the vehicle speed Vx, the stability factor A calculated from Equation (21), the wheel base L and the steering gear ratio N. The calculated steady yaw rate gain Ho is used to calculate the differentiated value $\ddot{\psi}r(n)$ of the target yaw rate from Equation (24) Furthermore, the present target yaw rate $\dot{\psi}r(n)$ is calculated, from Equation (45), based upon the new differentiated yaw rate value $\ddot{\psi}r(n)$ calculated in the present cycle of execution of this program and the last differentiated yaw rate value $\ddot{\psi}r(n-1)$ calculated in the last cycle of execution of the program. The calculated target yaw rate value $\dot{\psi}r(n)$ is used to update the last target yaw rate value stored in the computer memory.

$$\dot{\phi}r(n) = \dot{\phi}r(n-1) + \ddot{\phi}r(n) \cdot \Delta T \qquad\qquad (45)$$

where $\Delta T$ is the time interval between successive entries of this program.

At the point 112 in the program, the central processing unit calculates the value Vyr1(n) from Equation (25) and the value Vyr1(n) from the following equation:

$$Vyr1(n) = \dot{V}yr1(n-1) + Vyr1(n) \cdot \Delta T \qquad (46)$$

The calculated value Vyr1(n) is used to calculate the differentiated value Vyr(n) of the target lateral speed from Equation (26). The target lateral speed is calculated from the following equation:

$$Vyr(n) = \dot{V}yr(n-1) + Vyr(n) \cdot \Delta T \qquad (47)$$

At the point 114 in the program, the central processing unit calculates a target rear-wheel steering angle $\delta r(n)$ from Equation (30) and a difference $\Delta Bf(n)$ between the braking forces applied to the left and right front wheels from Equation (29). The calculated braking force difference value $\Delta Bf(n)$ is used, along with the coefficient kp, to calculate a target pressure difference value $\Delta P$ from Equation (32).

At the point 116 in the program, the central processing unit sets the target cylinder pressure $P^*_{FL}$ at a value calculated from Equation (39) and the target cylinder pressure $P^*_{FR}$ at a value calculated from Equation (40), and the target rear-wheel steering angle $\delta r^*$ at the calculated value $\delta r(n)$. Following this, the program proceeds to the end point 118.

The control unit 16 controls the control valve 50 to bring the rear-wheel steering angle to the target value $\delta r^*$. The control unit 16 also controls the fluid pressures supplied to the left and right wheel cylinders 1FL and 1FR to the target values $P^*_{FL}$ and $P^*_{FR}$.

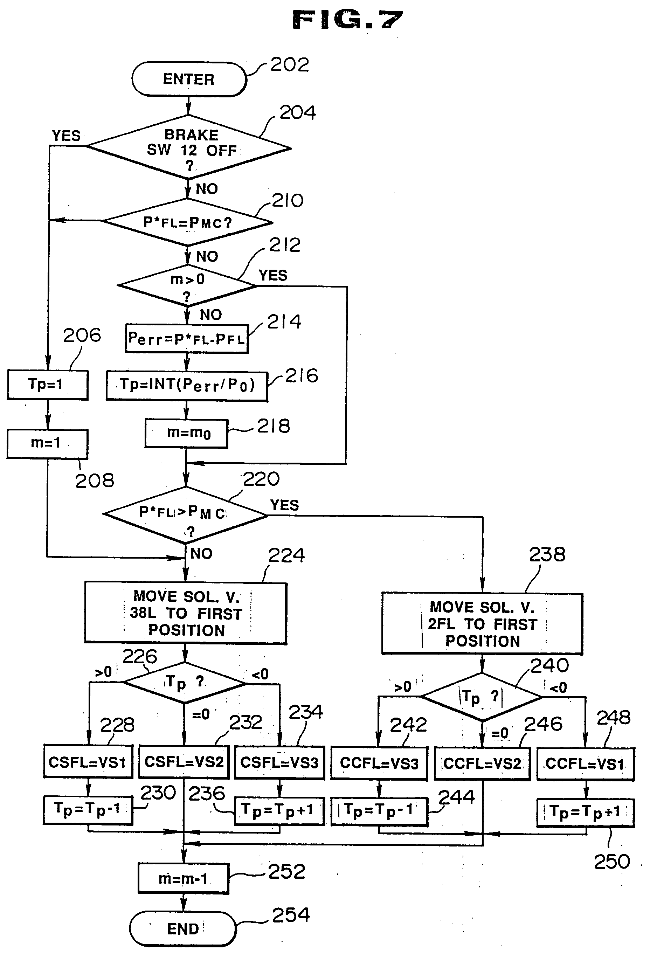

Fig. 7 is a flow diagram illustrating the programming of the digital computer as it is used to control the fluid pressure introduced to the wheel cylinder 1FL. The computer program is entered at the point 202 at uniform intervals of time $\Delta$. At the point 204 in the program, a determination is made as to whether or not the brake switch 13 is off. If the answer to this question is "yes", then it means the absence of vehicle braking and the program proceeds to the point 206 where a first variable Tp is set at 1 and then to the point 208 where a second variable m is set at 1. The first variable Tp indicates the time interval during which the control signal to be described later is retained, and the second variable m indicates the time intervals at which an error between the actual cylinder pressure $P_{FL}$ and the target cylinder pressure $P^*_{FL}$ is monitored. Upon completion of these settings, the program proceeds to the point 224.

If the brake switch 13 is on, then it means that brakes are applied to the vehicle and the program proceeds from the point 204 to another determination step at the point 210. This determination is as to whether or not the target cylinder pressure $P^*_{FL}$ calculated in the program of Fig. 6 is equal to the master cylinder pressure $P_{MC}$. If the answer to this question is "yes", then the program proceeds to the point 206. Otherwise, the program proceeds to the point 212.

At the point 212 in the program, a determination is made as to whether or not the second variable m is greater than zero. If the answer to this question is "yes", then the program proceeds to the point 220. Otherwise, the program proceeds to the point 214 where an error Perr ($= P^*_{FL} - P_{FL}$) between the actual and target values of the pressure applied to the wheel cylinder 1FL and then to the point 216 where the first variable Tp is calculated as

Tp = INT(Perr/Po)

where Po is a reference value indicating an acceptable range and INT means to round to the nearest whole number. At the point 218 in the program, the second variable m is set at a predetermined value mo. Upon completion of this setting, the program proceeds to the point 220.

At the point 220 in the program, a determination s made as to whether or not the target value $P^*_{FL}$ is greater than the master cylinder pressure $P_{MC}$. If the answer to this question is "yes", then it means that the first actuator 3 (Fig. 3) should be used to control the braking fluid pressure applied to the wheel cylinder 1FL and the program proceeds to the point 238. If the target value $P^*_{FL}$ is equal to or less than the master cylinder pressure $P_{MC}$, then it means that the second actuator 2 (Fig. 2) should be used to control the braking fluid pressure applied to the wheel cylinder 1FL and the program proceeds to the point 224.

At the point 224 in the program, the solenoid valve 38L is moved to its first position illustrated in Fig. 3. Following this, the program proceeds to a determination step at the point 226. This determination is as to whether the first variable Tp is positive, negative or zero. If the first variable Tp is positive, then the program proceeds to the point 228 where a command is produced to output a control signal CSFL having a first value VS1 causing the constant current circuit to hold the solenoid valve 2FL in the first position increasing the fluid pressure to the wheel cylinder 1FL and then to the point 230 where 1 is subtracted from the first variable Tp. The new value (Tp - 1) of the first variable is used to update the last first variable value stored in the computer memory. Following this, the program proceeds to the point 252.

If the first variable Tp is zero, then the program proceeds from the point 226 to the point 232 where a command is produced to output a control signal CSFL having a second value VS2 causing the constant current circuit to move the solenoid valve 2FL to the second position retaining the fluid pressure in the wheel cylinder 1FL. Following this, the program proceeds to the point 252.

If the first variable Tp is negative, then the program proceeds from the point 226 to the point 234 where a command is produced to output a control signal CSFL having a third value VS3 causing the constant current circuit to move the solenoid valve 2FL to the third position decreasing the fluid pressure in the wheel cylinder 1FL and then to the point 236 where 1 is added to the first variable Tp. The new value (Tp + 1) is used to update the last value of the first variable stored in the computer memory. Following this, the program proceeds to the point 252.

At the point 252 in the program, 1 is subtracted from the second variable m. The new value (m - 1) of the second variable is used to update the last second variable value stored in the computer memory. Following this, the program proceeds to the end point 254.

12

At the point 238 in the program, the solenoid valve 2FL is moved to its first position increasing the fluid pressure to the wheel cylinder 1FL. Following this, the program proceeds to a determination step at the point 240. This determination is as to whether the first variable Tp is positive, negative or zero. If the first variable Tp is positive, then the program proceeds to the point 242 where a command is produced to output a control signal CCFL having a third value VC3 causing the constant current circuit to hold the solenoid valve 38L in the third position increasing the fluid pressure to the wheel cylinder 1FL and then to the point 244 where 1 is subtracted from the first variable Tp. The new value (Tp - 1) of the first variable is used to update the last first variable value stored in the computer memory. Following this, the program proceeds to the point 252.

If the first variable Tp is zero, then the program proceeds from the point 240 to the point 246 where a command is produced to output a control signal CCFL having a second value VS2 causing the constant current circuit to move the solenoid valve 38L to the second position retaining the fluid pressure in the wheel cylinder 1FL. Following this, the program proceeds to the point 252.

If the first variable Tp is negative, then the program proceeds from the point 240 to the point 248 where a command is produced to output a control signal CCFL having a first value VC1 causing the constant current circuit to move the solenoid valve 38L to the first position, illustrated in Fig. 3, decreasing the fluid pressure in the wheel cylinder 1FL and then to the point 250 where 1 is added to the first variable Tp. The new value (Tp + 1) is used to update the last value of the first variable stored in the computer memory. Following this, the program proceeds to the point 252.

A similar program is executed separately at uniform intervals of time $\Delta T$ for controlling the fluid pressure introduced to the wheel cylinder 1FR.

When the vehicle is traveling in the absence of vehicle braking or the target value $P^*_{FL}$ is the same as the master cylinder pressure $P_{MC}$ in the presence of vehicle braking, the braking fluid pressure control is unnecessary and the solenoid valve 2FL at its first position increasing the fluid pressure introduced into the wheel cylinder 1FL so that the braking fluid pressure introduced into the wheel cylinder 1FL corresponds to the degree of depression of the brake pedal.

In such a manner, the cylinder pressures $P_{FL}$ and $P_{FR}$ in the wheel cylinders 1FL and 1FR can be adjusted to the target cylinder pressures $P^*_{FL}$ and $P^*_{FR}$, respectively.

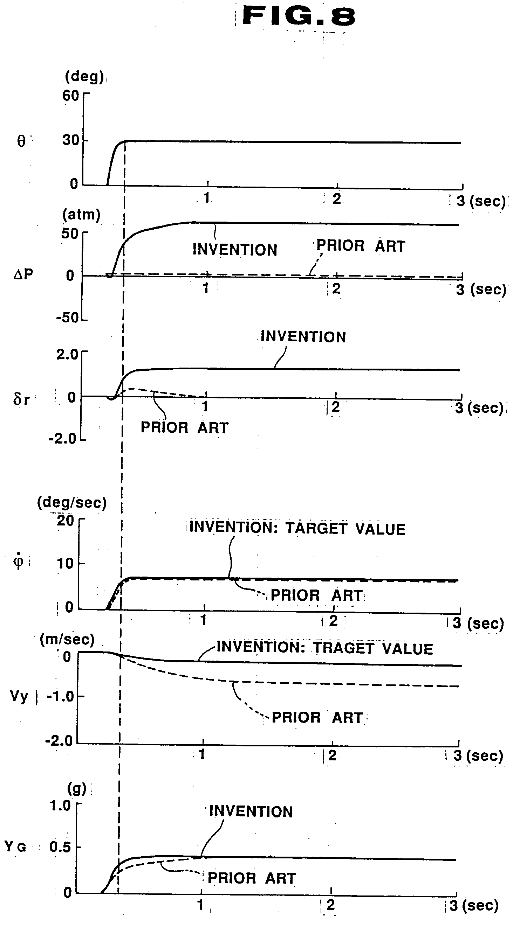

According to the invention, it is possible to bring the vehicle yaw rate $\dot{\psi}$ and the vehicle lateral speed Vy to respective target values, as shown in Fig. 8, by controlling two parameters ($\Delta P$ and $\delta r$). As a result, the response of the lateral speed $Y_G$ ($= Vx \cdot \dot{\psi} + Vy$) can be improved.

Although the invention has been described in connection with rear-wheel steering control, it is to be noted, of course that front- and/or rear- wheel steering control may be utilized to control the yaw rate. In addition, the vehicle dynamic characteristic control apparatus of the invention may be arranged to provide a difference between the braking force applied to the left-rear wheel and the braking force applied to the right-rear wheel to control the vehicle lateral speed. In order to take into account the influence of load shift to the front wheels, the vehicle longitudinal acceleration may be used, along with the wheel cylinder pressures, to calculate the cornering powers in the presence of vehicle braking.

## Claims

1. A vehicle dynamic characteristic control apparatus for use with an automotive vehicle supported on a pair of front wheels and a pair of rear wheels, the vehicle has a first degree of freedom providing a first motion of the vehicle and a second degree of freedom providing a second motion of the vehicle, the first and second motions being on a plane, the apparatus comprising:

   a first unit for controlling braking forces to be applied to left and right wheels of at least one of the wheel pairs to provide a difference between the braking force applied to the left wheel and the braking force applied to the right wheel;

   a second unit for controlling a steering angle of one of the wheel pairs;

   sensor means sensitive to operating conditions of the vehicle for providing sensor signals indicative of sensed vehicle operating conditions; and

   a third unit coupled to the sensor means for controlling the first and second units, the third unit includes first means for calculating a first target value for a first parameter related to the first motion of the vehicle based upon the sensed vehicle operating conditions and a second target value for a second parameter related to the second motion of the vehicle based upon the sensed vehicle operating conditions, the first means controlling the first and second units to bring the first parameter to the first target value and the second parameter to the second target value.

13

2. The vehicle dynamic characteristic control apparatus as claimed in claim 1, wherein the first parameter is a vehicle yaw rate and the second parameter is a vehicle lateral speed.

3. The vehicle dynamic characteristic control apparatus as claimed in claim 1, wherein the first parameter is a vehicle lateral speed and the second parameter is a vehicle yaw rate.

FIG. 1

EP 0 476 373 A2

FIG. 2

EP 0 476 373 A2

FIG. 3

FIG. 4

# FIG.5

# FIG.6

```
        ( ENTER )                    ─102

            │
            ▼
    ┌──────────────────┐
    │   READ Vx, θ     │             ─104
    └──────────────────┘
            │
            ▼
```

$a_{11}V = -2(K_fL_f^2 + K_rL_r^2)/1_z$
$a_{12}V = -2(K_fL_f - K_rL_r)/1_z$
$a_{21}V = -2(K_fL_f - K_rL_r)/M$
$a_{22}V = -2(K_f + K_r)/M$
$\qquad A = -M(L_fK_f + L_rK_r)/(2L^2K_fK_r)$

─106

$a_{11} = a_{11}v/Vx \qquad a_{12} = a_{12}v/Vx$
$a_{21} = a_{21}v/Vx - Vx \qquad a_{22} = a_{22}v/Vx$

─108

$\Pi_0 = (LN)^{-1}Vx/(1 + AVx^2)$
$\dot\varphi_r(n) = \tau^{-1}\Pi_0\theta - \tau_1^{-1}\varphi_r(n-1)$
$\varphi_r(n) - \varphi_r(n-1) + \dot\varphi_r(n)\Delta T$

─110

$\dot V_{yr}(n) = KG_0\theta(n)\tau_2 - V_{yr1}(n-1)\tau_2$
$V_{yr1}(n) = V_{yr1}(n-1) + \dot V_{yr1}(n)\Delta T$
$\dot V_{yr}(n) = V_{yr1}(n)\tau_2 - V_{yr}(n)/\tau_2$
$V_{yr}(n) = V_{yr}(n-1) + \dot V_{yr}(n)\Delta T$

─112

$\delta_r(n) = \{\dot V_{yr}(n) - a_{21}\varphi_r(n) - a_{22}V_{yr}(n) - b_{f2}\theta(n)\}/b_{r2}$
$\Delta B_f(n) = \{\dot\varphi_r(n) - a_{11}\varphi_r(n) - a_{12}V_{yr}(n) - b_{f1}\theta(n)\}/b_{p1}$
$\qquad - b_{r2}\{\dot V_{yr}(n) - a_{21}\varphi_r(n) - a_{22}V_{yr}(n) - b_{f2}\theta(n)\}/(b_{p1}b_{r2})$
$\Delta P = \Delta B_f(n)/kp$

─114

$P^*_{FL} = \max\{P_{MC} + \Delta P/2, \Delta P, 0\}$
$P^*_{FR} = \max\{P_{MC} - \Delta P/2 - \Delta P, 0\}$
$\delta_r^* = \delta_r(n)$

─116

```
        (  END  )                    ─118
```

# FIG.7

# FIG.8